# EUROPÄISCHE PATENTSCHRIFT

(11) **EP 0 545 061 B1**
(45) Veröffentlichungstag und Bekanntmachung des Hinweises auf die Patenterteilung: **17.05.1995**
(21) Anmeldenummer: 92118211.9
(22) Anmeldetag: 23.10.1992
(51) Int. Cl.: G01L 5/28

(54) **Verfahren zur automatischen Nullpunkt Fehlerkorrektur der Bremskraftanzeige eines Bremsprüfstandes für Kraftfahrzeuge**
Method for correcting automatically the zero-point of brake indicator of a braking bench for vehicle
Procédé pour corriger automatiquement l'erreur du point zéro de l'indicateur de frein d'un banc d'essai de freinage pour véhicule

(30) Priorität: 29.11.1991 DE 4139477
(43) Veröffentlichungstag der Anmeldung: 09.06.1993
(73) Patentinhaber: HOFMANN WERKSTATT-TECHNIK GMBH, D-64319 Pfungstadt (DE)
(72) Erfinder: Zenzinger, Hans-Michael, W-6084 Gernsheim/Rh. (DE)
(74) Vertreter: Nöth, Heinz, Dipl.-Phys.

(56) Entgegenhaltungen:
- EP-A- 0 103 116
- EP-A- 0 492 626
- DE-A- 3 300 446
- US-A- 4 348 625
- ZEV GLASERS ANNALEN, Bd. 112, Nr. 5, Mai 1988, Berlin, DE, W. HENDRICHS: "Dimensionierung und Vergleichbarkeit von Schwungmassen - Reibungsprüfständen", Seiten 176, 178-180, 182-184

## Beschreibung

Die Erfindung betrifft ein Verfahren nach dem Oberbegriff des Patentanspruchs 1 und eine entsprechende Vorrichtung - Anspruch 3.

Bremsprüfstände zur Ermittlung der Bremskraft von Kraftfahrzeugbremsen, wofür ein Typ samt Meßaufbau z.B. in dem Katalog der Firma Hofmann Werkstatt-Technik GmbH "Bremsprüfstände für Lkw/Pkw kombiniert, brekon 1/13, 1/16, 2/13 (Impressum 9402218 10.87 D)" erläutert ist, besitzen zwei Laufrollenpaare, auf die bei der Bremsprüfung die zu prüfenden und an einer Antriebsachse des Kraftfahrzeugs befestigten Räder aufgesetzt werden. Für den Antrieb der beiden Laufrollenpaare sind zugeordnete Antriebseinrichtungen in Form von Antriebsmotoren vorgesehen. Hierzu weisen die beiden Laufrollenpaare jeweils drehfest mit den Laufrollen verbundene Kettenräder auf, welche von einem Kettentrieb umschlungen werden. Ferner besitzt jeder Antriebsmotor ein Kettenrad auf seiner Motorwelle, das über einen Kettentrieb eines der beiden Kettenräder der Laufrollen antreibt.

Das Meßsystem zur Ermittlung der Bremskraft besteht jeweils aus einem Drehmomenthebel, der am Gehäuse des Antriebsmotors befestigt ist. Dieser Drehmomenthebel ist zwischen zwei Anschlägen um die Achse der Motorwelle schwenkbar. Der Drehmomenthebel dient zur Betätigung eines Biegestabes, der einseitig, beispielsweise am Maschinenrahmen, abgestützt ist. Am Biegestab sind Dehnungsmeßstreifen vorgesehen zur Erzeugung elektrischer Signale, die proportional zur ermittelten Bremskraft sind. Die Bremskraft äußert sich dabei als Reaktionsmoment des Antriebsmotors und entsprechende Auslenkung des Drehmomenthebels, die auf den Biegestab übertragen wird. Die Dehnungsmeßstreifen verursachen dann proportionale elektrische Signale, die über einen Verstärker und einen diesem nachgeschalteten Servoverstärker in einen Servomotor oder Schrittmotor einer Bremskraftanzeige, die ein Potentiometer, Zahnräder und einen Zeiger aufweist, eingespeist werden, wobei der Servomotor entsprechend der jeweiligen Bremskraft die Auslenkung des zeigers aus seiner Nullage bewirkt. Natürlich können die Signale mit Hilfe von Digitalanzeigen oder Quasi-Analog-Anzeigen auf Bildschirmen dargestellt werden.

Bei den derzeit im Einsatz befindlichen Bremsprüfständen wird eine Justierung bzw. Nullpunkt-Fehlerkorrektur der Bremskraftanzeige beim Einbau des Bremsprüfstandes beim Kunden und danach im Regelfall nur nach Reparaturen bzw. bei der jeweils im Abstand von zwei Jahren vorgeschriebenen Stückprüfung durchgeführt. Die Justierung erfolgt bei laufendem Antrieb des unbelasteten, d.h. nicht mit einem Kraftfahrzeug besetzten Bremsprüfstandes. Sie ermittelt den so genannten Gesamtkorrekturwert, der sich aus dem statischen Korrekturwert, d.h. der Nullpunktkorrektur der statisch bedingten bereits bei nicht laufendem Antrieb auftretenden Änderungen des Bremsprüfstandes, z.B. Änderungen der Bauteiletoleranzen, der Vorlast des Drehmomenthebels. elektrischer Komponenten und dergl. und aus dem dynamischen Korrekturwert zusammensetzt, d.h. der Nullpunktkorrektur der dynamisch bedingten, also erst bei laufendem Antrieb auf den Bremsprüfstand einwirkenden Kräfte, wie z.B. Kettenabrollkräfte und Reibungskräfte.

Aus Sicherheitsgründen muß bei dieser bei laufendem Antrieb erfolgenden Justierung der Justiervorgang stets durch die manuelle Betätigung eines Auslöseschalters, d.h. eines sogenannten Justierknopfes, ausgelöst werden. Man hat damit eine auf relativ große Zeitabstände beschränkte Justierung bzw. Nullpunkt-Fehlerkorrektur der Bremskraftanzeige. Eine stets auf den aktuellen Zustand des Bremsprüfstandes, insbesondere der zur Meßwerterfassung gehörigen und raschen Zustandsänderungen unterworfenen Bauteile abgestellte Justierung wird jedoch nicht erreicht.

Die vorliegende Erfindung hat sich die Aufgabe gestellt, ein Verfahren zu schaffen, das im Unterschied zur vorstehend erläuterten Justierung eine fortlaufende automatische Nullpunkt-Fehlerkorrektur der Bremskraftanzeige eines Bremsprüfstandes für Kraftfahrzeuge ermöglicht.

Zur Lösung dieser Aufgabe sieht die Erfindung vor, daß bei eingeschaltetem und unbelastetem Bremsprüfstand der Korrekturwert bei stehendem Antrieb (statischer Korrekturwert) und der Gesamtkorrekturwert (statischer und dynamischer Korrekturwert) bei laufendem Antrieb ermittelt werden, daß die Differenz aus Gesamtkorrekturwert und statischem Korrekturwert als Konstante und der statische Korrekturwert als Variable gespeichert werden, daß die Variable automatisch und in bestimmten Intervallen zwischen aufeinander folgenden Bremsprüfungen stets erneut ermittelt und jeweils mit der Konstanten zum Gesamtkorrekturwert aufaddiert wird, wobei mittels eines diesem Gesamtkorrekturwert proportionalen Signals die Nullpunkt-Fehlerkorrektur der Bremskraftanzeige automatisch erfolgt. Eine entsprechende Vorrichtung ist im unabhängigen Anspruch 3 angegeben.

Auch bei diesem Verfahren erfolgt die Ermittlung des Gesamtkorrekturwerts bei laufendem Antrieb und in der Regel nur in den eingangs erwähnten großen Zeitabständen, d.h. bei Inbetriebnahme, Reparatur oder Stückprüfung des Bremsprüfstandes. Jedoch wird im Unterschied zur bekannten Justierung der statische Anteil am Gesamtkorrekturwert zur Berücksichtigung rascher Zustandsänderungen an Bauteilen laufend automatisch überprüft und auf den aktuellen Wert gebracht.

Eine weitere verbesserte Nullpunktkonstanz der Bremskraftanzeige ist erreichbar, wenn zusätzlich die im laufenden Betrieb durch thermisch bedingte Viskositätsänderungen des Getriebeöls des Kettenradantriebs verursachte Nullpunktabweichung der Bremskraftanzeige eliminiert wird.

Zu diesem Zweck wird mittels eines Temperaturfühlers die Getriebeöltemperatur gemessen und im Zusammenwirken mit einer Kennlinie, welche die Nullpunktabweichung in Abhängigkeit von der Getriebeöltemperatur bzw. Viskosität wiedergibt, die Temperatur bedingte Nullpunktabweichung bevorzugt automatisch korrigiert. Ferner können auch Lufttemperatur im Rollensatz und weitere Einflußkomponenten, wie z.B. Abrolleinflüsse der Kitte, Verlängerung bzw. Verkürzung des Hebelarms durch Temperaturschwankungen berücksichtigt werden.

Die Erfindung wird anhand der Figuren noch näher erläutert. Es zeigt:
- Fig. 1: schematisch ein Ausführungsbeispiel; und
- Fig. 2: eine Einzelheit des Ausführungsbeispiels als Blockschaltbild.

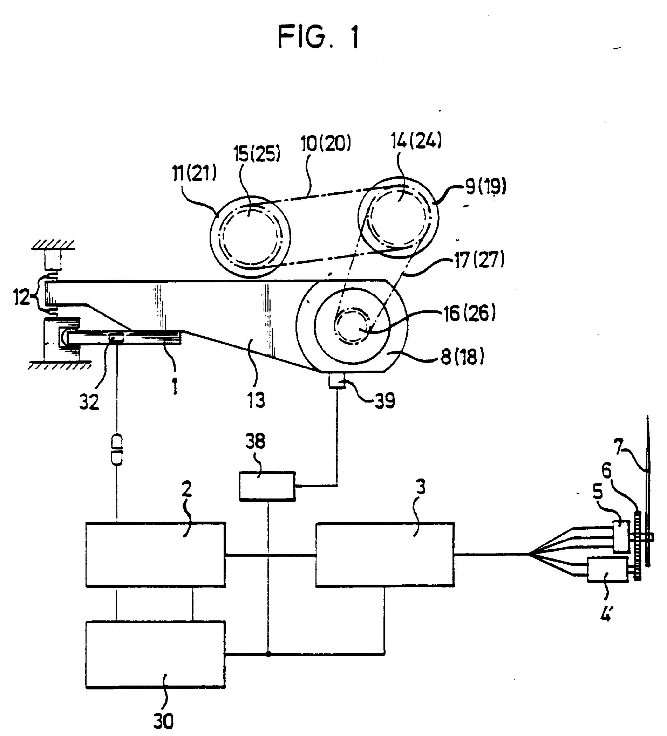

Der in Fig. 1 schematisch dargestellte Bremsprüfstand besitzt zwei Laufrollenpaare 9, 11 und 19, 21, auf die bei der Bremsprüfung die zu prüfenden und an einer Antriebsachse des Kraftfahrzeugs befestigten Räder aufgesetzt werden. Für den Antrieb der beiden Laufrollenpaare 9, 11 und 19, 21 sind zugeordnete Antriebseinrichtungen in Form von Antriebsmotoren 8, 18 vorgesehen. Hierzu weisen die beiden Laufrollenpaare jeweils drehfest mit den Laufrollen verbundene Kettenräder 14 (24) und 15 (25) auf, welche von einem Kettentrieb 10 (20) umschlungen werden. Ferner besitzt jeder Antriebsmotor 8 bzw. 18 ein Kettenrad 16 (26) auf seiner Motorwelle, das über einen Kettentrieb 17 (27) eines der beiden Kettenräder der Laufrollen (im Ausführungsbeispiel das Kettenrad 14 (24)) antreibt.

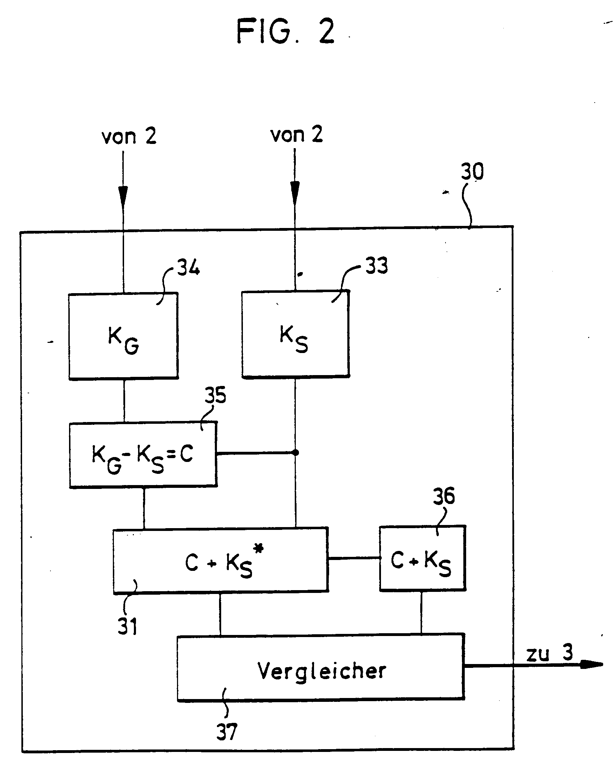

Das Meßsystem zur Ermittlung der Bremskraft besteht jeweils aus einem Drehmomenthebel 13, der am Gehäuse des Antriebsmotors 8 bzw. 18 befestigt ist. Dieser Drehmomenthebel ist zwischen zwei Anschlägen 12, 12 umd die Achse der Motorwelle schwenkbar. Der Drehmomenthebel dient zur Betätigung eines Biegestabes 1, der einseitig, beispielsweise am Maschinenrahmen, abgestützt ist. Am Biegestab 1 sind schematisch dargestellte Dehnungsmeßstreifen 32 vorgesehen zur Erzeugung elektrischer Signale, die proportional zur ermittelten Bremskraft sind. Die Bremskraft äußert sich dabei als Reaktionsmoment des Antriebsmotors 8 bzw. 18 und entsprechende Auslenkung des Drehmomenthebels 11, die auf den Biegestab 1 übertragen wird. Die Dehnungsmeßstreifen 32 verursachen dann proportionale elektrische Signale, die über einen Verstärker 2 und einen diesem nachgeschalteten Servoverstärker 3 in einen Servomotor 4 einer Bremskraftanzeige, die ein Potentiometer 5, Zahnräder 6 und einen Zeiger 7 aufweist, eingespeist werden, wobei der Servomotor entsprechend der jeweiligen Bremskraft die Auslenkung des Zeigers aus seiner Nullage bewirkt. Eine Nullpunktkorrektureinrichtung 30 wird anhand der Fig. 2 erläutert.

Die in der Fig. 2 dargestellte Nullpunktkorrektureinrichtung 30 enthält zwei Speicher 33 und 34. Dem Speicher 33 wird bei eingeschaltetem Prüfstand mit stillstehendem Antrieb ein statischer Korrekturwert K_{S} in Form eines Signals von den Dehnungsmeßstreifen 32 über den Verstärker 2 zugeführt. An einem weiteren Eingang wird bei laufendem Antrieb einem Speicher 34 von den Dehnungsmeßstreifen 32 über den Verstärker 2 bei unbelastetem Bremsprüfstand ein weiterer Korrekturwert Kg 34 zugeführt. An die beiden Speicher 33 und 34 ist ein Differenzbildner angeschlossen, der die Differenz aus dem Gesamtkorrekturwert K_{G} und dem statischem Korrekturwert K_{S} bildet. Diese Differenz wird als Konstante C in einen arithmetischen Addierer 31 eingegeben. An diesen arithmetischen Addierer ist der Speicher 33 für den statischen Korrekturwert K_{S} direkt angeschlossen. An die arithmetische Addiereinrichtung 31 kann ferner ein Sollwertspeicher 36 angeschlossen sein, in welchem ein aus der Addition C + K_{S} gebildeter Sollwert für den Gesamtkorrekturwert abgespeichert ist.

Der arithmetische Addierer 31 ist ferner direkt an den Speicher 33 angeschlossen. Über den Speicher 33 werden dem Addierer 31 in bestimmten Zeitabständen zwischen jeweiligen Bremsprüfungen gewonnene variable statische Korrekturwerte K*_{S} zugeführt. Diese jeweiligen variablen statischen Korrekturwerte werden dann mit der Konstanten C addiert und in einem Vergleicher 37, welcher an den arithmetischen Addierer 31 und den Sollwertspeicher 36 angeschlossen ist, miteinander verglichen. Aus diesem Vergleich wird ein Nachstellwert gewonnen, der in Form eines Signales dem Servoverstärker 3 oder auch direkt der Anzeigeeinrichtung, bestehend aus den Bauteilen 4 bis 7, zugeführt wird.

Anstelle der in der Fig. dargestellten mechanischen Anzeigeeinrichtung mit dem Zeiger 7 kann auch ein Bildschirmgerät verwendet werden. Für die Bildschirmanzeige kann beispielsweise eine Anzeigeeinrichtung zum Einsatz kommen, wie sie in der deutschen Patentanmeldung P 41 27 963.8 beschrieben ist (DE-A1-4127963 veröffentlicht 25,2,93).

Die automatische Nullpunkt-Fehlerkorrektur wird wie folgt durchgeführt:

Bei der Inbetriebnahme nach dem Einbau des Prüfstandes an seinem Einsatzort oder nach Reparaturarbeiten oder bei der turnusgemäß durchgeführten Stückprüfung werden zwei Nullpunktkorrekturwerte ermittelt, nämlich der statische Korrekturwert und der Gesamtkorrekturwert oder in umgekehrter Reihenfolge. Der statische Korrekturwert wird bei stillstehendem Antrieb als Zustandssignal von den Dehnungsmeßstreifen 32 oder einer anderen geeigneten Wandlereinrichtung in der Meßanordnung abgeleitet. Der Bremsprüfstand ist dabei unbelastet. Hierbei werden Bauteiletoleranzen und Vorlast auf den Drehmomenthebel und thermische Nullpunktdrift bei den elektronischen Bauteilen und Meßwandlern berücksichtigt. Ferner wird der Gesamtkorrekturwert bei laufendem Antrieb und unbelastetem Bremsprüfstand durchgeführt. Dieser Gesamtkorrekturwert setzt sich zusammen aus einem statischen Anteil, welcher dem statischen Korrekturwert entspricht, und einem dynamischen Anteil. Der Gesamtkorrekturwert K_{G} und der statische Korrekturwert K_{S} werden in der Nullpunktkorrektureinrichtung 30, wie oben beschrieben, verarbeitet. Dabei kann der Wert C+K_{S} als Sollwert im Sollwertspeicher 36 abgelegt werden.

Es ist auch möglich, bei eingeschaltetem und laufendem unbelastetem Bremsprüfstand zunächst den Gesamtkorrekturwert K_{G} zu ermitteln und zu speichern und dem nächsten zwischen den aufeinander folgenden Bremsprüfungen ermittelten statischen Korrekturwert für die Bestimmung des dynamischen Korrekturwertes zu verwenden.

Für die weitere automatische fortlaufende Nullpunkt-Fehlerkorrektur des Prüfstandes wird dann bei der Initialisierung bzw. beim Einschalten des Prüfstandes der statische Korrekturwert, der eine variable Größe (K*_{S}) darstellt, neu ermittelt und im Speicher 33 entsprechend geändert. Diese Prozedur wiederholt sich, solange der Prüfstand eingeschaltet bleibt und kein Fahrzeug sich auf dem Rollensatz befindet, d.h. bei unbelastetem Prüfstand wiederholt sich dieser Vorgang in bestimmten Zeitabständen. Die variablen Größen für die so fortlaufend ermittelten statischen Korrekturwerte K*_{S} werden dem arithmetischen Additionsrechner 31 zugeführt und mit der konstanten Größe C addiert. Das gewonnene Ausgangssignal kann als Korrekturgröße dem Servoverstärker 3 oder direkt der Anzeigeeinrichtung 4 bis 7 zugeführt werden. Es kann jedoch auch im Vergleicher 37 durch den oben erläuterten Vergleich mit dem Sollwert im Sollwertspeicher 36 ein entsprechendes Signal erzeugt werden, das die Nullpunktabweichung kompensiert.

Ferner kann eine Temperaturmeßeinrichtung 39 mit einem Temperaturfühler vorgesehen sein, der am Getriebe des Antriebs die Temperatur des Getriebeöls mißt. Auf diese Weise gewinnt man eine Erfassung der temperaturbedingten Änderung der Viskosität des Getriebeöls. Die Temperaturabhängigkeit des Getriebeöls ist in einer entsprechenden Speichereinrichtung 38 vorgesehen. In Abhängigkeit von der gemessenen Temperatur des Getriebeöls liefert die Speichereinrichtung 38 ein Ausgangssignal, mit welchem das Ausgangssignal der Nullpunktkorrektureinrichtung 30 beaufschlagt wird. Auf diese Weise läßt sich eine zusätzliche Verbesserung der Konstanz des Nullpunktes erreichen.

## Patentansprüche

1. Verfahren zur automatischen Nullpunkt-Fehlerkorrektur der Bremskraftanzeige eines Bremsprüfstandes für Kraftfahrzeuge, dadurch gekennzeichnet, daß bei eingeschaltetem und unbelastetem Bremsprüfstand der Korrekturwert bei stehendem Antrieb, statischer Korrekturwert K_{S}, und der Gesamtkorrekturwert K_{G}, statischer und dynamischer Korrekturwert, bei laufendem Antrieb ermittelt werden, daß die Differenz aus Gesamtkorrekturwert und statischem Korrekturwert als Konstante und der statische Korrekturwert als Variable gespeichert werden, daß die Variable automatisch und in bestimmten Intervallen zwischen aufeinander folgenden Bremsprüfungen erneut ermittelt und jeweils mit der Konstanten zum Gesamtkorrekturwert aufaddiert wird, wobei mittels eines diesem Gesamtkorrekturwert proportionalen Signals die Nullpunkt-Fehlerkorrektur der Bremskraftanzeige automatisch erfolgt.

2. Verfahren nach Anspruch 1, dadurch gekennzeichnet, daß zusätzlich eine Kennlinie gespeichert wird, welche die Abhängigkeit der Nullpunktabweichung der Bremskraftanzeige von der Temperatur des Getriebeöls des Kettenradantriebs wiedergibt und daß die Temperatur des Getriebeöls gemessen und entsprechend der dieser Temperatur zugeordneten Nullpunktabweichung die Nullpunktabweichung automatisch korrigiert wird.

3. Vorrichtung an einem Bremsprüfstand für Kraftfahrzeuge zur automatischen Nullpunktkorrektur einer Bremskraftanzeigeeinrichtung des Bremsprüfstandes, dadurch gekennzeichnet, daß mit dem Meßwandler (32) des Bremskraftmeßsystems eine Nullpunktkorrektureinrichtung (30) verbunden ist, die eine arithmetische Addiereinrichtung (31) aufweist, in welcher eine konstante Differenz, K_{G} - K_{S}, von bei entlastetem Prüfstand mit laufendem Antrieb gemessenem Gesamtkorrekturwert, K_{G}, und von bei stillstehendem Antrieb gemessenem statischen Korrekturwert, K_{S}, und ein in bestimmten Zeitabständen bei unbelastetem Prüfstand und mit stillstehendem Antrieb empfangener variabler statischer Korrekturwert, K*_{S}, addierbar sind.

## Claims

1. A method of automatic zero point error correction of the braking force display of a brake test stand for motor vehicles, characterised in that, with the brake test stand switched on and unloaded, the correction value with the drive stationary, the static correction value K_{S}, is ascertained and the total correction value K_{G}, static and dynamic correction value, with the drive running is ascertained, that the difference between the total correction value and the static correction value as a constant and the static correction value as a variable are stored, that the variable is automatically ascertained again at given intervals between successive brake testing operations and respectively added up with the constant to give the total correction value, wherein zero point error correction of the braking force display is automatically effected by means of a signal which is proportional to said total correction value.

2. A method according to claim 1 characterised in that a characteristic is additionally stored, which reproduces the dependency of the zero point deviation of the braking force display on the temperature of the transmission oil of the chain wheel drive and that the temperature of the transmission oil is measured and the zero point deviation is automatically corrected in accordance with the zero point deviation associated with said temperature.

3. Apparatus on a brake test stand for motor vehicles for automatic zero point correction of a braking force display device of the brake test stand, characterised in that connected to the measuring transducer (32) of the braking force measuring system is a zero point correction means (30) having an arithmetic adding means (31) for adding a constant difference, K_{G} - K_{S}, of the total correction value, K_{G}, which is measured with the test stand relieved of load and with the drive running and the static correction value, K_{S}, which is measured with the drive stationary, and a variable static correction value, K*_{S}, which is received at given intervals of time with the test stand unloaded and with the drive stationary.

## Revendications

1. Procédé pour corriger de façon automatique l'erreur du zéro du dispositif d'affichage de la force de freinage d'un banc d'essai de freinage pour véhicules automobiles, caractérisé par le fait que, lorsque le banc d'essai de freinage est activé et n'est pas chargé, on détermine la valeur de correction dans le cas où le dispositif d'entraînement est à l'arrêt, à savoir la valeur de correction statique K_{S}, et la valeur de correction globale K_{G}, savoir lorsque le dispositif d'entraînement fonctionne, la valeur de correction statique et dynamique, qu'on mémorise la différence entre la valeur de correction globale et la valeur de correction statique sous la forme d'une constante et la valeur de correction statique sous la forme d'une variable, qu'on détermine à nouveau la variable d'une manière automatique et dans des intervalles de temps déterminés, entre des contrôles de freinage successifs et qu'on l'ajoute respectivement à la constante pour obtenir la valeur de correction globale, la correction de l'erreur de zéro du dispositif d'affichage de la force de freinage étant réalisée automatiquement au moyen d'un signal proportionnel à cette valeur de correction globale.

2. Procédé suivant la revendication 1, caractérisé par le fait qu'en outre une courbe caractéristique qui reproduit la dépendance de l'écart du zéro du dispositif d'affichage de la force de freinage vis-à-vis de la température de l'huile de la transmission du dispositif d'entraînement de roues à chaîne, est mémorisée et que la température de l'huile de la transmission est mesurée et que l'écart du zéro est corrigé automatiquement en fonction de l'écart du zéro associé à cette température.

3. Dispositif installé sur un banc d'essai de freinage pour véhicules automobiles pour la correction automatique du zéro d'un dispositif d'affichage de la force de freinage du banc d'essai de freinage, caractérisé par le fait qu'au transducteur de mesure (32) du système de mesure de la force de freinage est relié un dispositif (30) de correction du zéro, qui comporte un dispositif additionneur arithmétique (31), dans lequel une différence constante K_{G}-K_{S}, entre la valeur de correction globale K_{G}, mesurée lorsque le banc d'essai n'est pas chargé et que le dispositif d'entraînement fonctionne, et la valeur de correction statique K_{S}, qui est mesurée lorsque le dispositif d'entraînement est arrêté, et une valeur de correction statique variable K_{S}* reçue pendant des intervalles déterminés, alors que le banc d'essai n'est pas chargé et que le dispositif d'entraînement est arrêté, peuvent être additionnées.
